# EUROPÄISCHE PATENTANMELDUNG

(11) **EP 1 731 621 A1**
(43) Veröffentlichungstag der Anmeldung: **13.12.2006**
(21) Anmeldenummer: 06090046.1
(22) Anmeldetag: 30.03.2006
(51) Int. Cl.: C22B 1/20, B65G 47/19, B65G 65/48, B65G 65/46

(54) **Verfahren und Einrichtung zum Aufgeben von Sintermaterial auf ein Sinterband**

(30) Priorität: 08.06.2005 DE 102005027275
(71) Anmelder: Salzgitter Mannesmann GmbH, 38239 Salzgitter (DE)
(72) Erfinder: Träger, Bernhard, 47228 Duisburg (DE); Gaertner, Ralf, 47228 Duisburg (DE)
(74) Vertreter: Meissner, Peter E.

(57) **Zusammenfassung**

Die Erfindung betrifft ein Verfahren zum Aufgeben von Sintermaterial auf ein Sinterband, wobei das Sintermaterial aus einer Aufgabeeinrichtung (1,3,4) auf das Sinterband befördert, anschließend grob verteilt und die Schichthöhe des Sintermaterials auf dem Sinterband auf Sollschichtdicke vergleichmäßigt wird, so wie eine Vorrichtung zur Durchführung des Verfahrens. Die Vergleichmäßigung der Schichthöhe erfolgt durch horizontalen Quertransport des Sintermaterials mittels einer drehbaren Verteilerschenecke (10), die sich über die gesamte Breite des Sinterbendes erstreckt.

## Beschreibung

Die Erfindung betrifft ein Verfahren und eine Einrichtung zum Aufgeben von Sintermaterial auf ein Sinterband gemäß dem Oberbegriff des Patentanspruches 1.

In der Eisenindustrie werden zur Vorbereitung der Einsatzstoffe für den Hochofen feinkörnige Eisenerze einem Sinterprozess unterworfen.

Für den Sinterprozess wird das Sintermaterial üblicherweise aus einer Aufgabeeinrichtung auf ein als Wanderrost ausgebildetes Sinterband gegeben. Da sowohl die Sinterleistung als auch die Sinterqualität neben zahlreichen anderen Faktoren durch die Art der Aufgabe des Sintermaterials auf das Sinterband beeinflusst werden, soll das Sinterband gleichmäßig in möglichst lockerer Schüttung mit dem Sintermaterial belegt werden. Dies ist notwendig, um eine hohe Gasdurchlässigkeit des Sintermaterials und damit eine gleichmäßige Sinterung zu erreichen.

Notwendig für eine gleichmäßige Sinterqualität ist außerdem, dass eine gleichmäßige Schichthöhe des Sintermaterials auf dem Sinterband in der Weise eingestellt wird, dass örtliche Verdichtungen des Sintermaterials vermleden werden.

Aus der GB 1 222 856 ist eine Förderschnecke zum Transport von Fördergut bekannt. Der Aufbau der Förderschnecke sieht einen Grundkörper und Transportwindungen vor, die mit unterschiedlicher Geschwindigkeit rotleren können.

Aus der GB 2 170 771 A ist eine Förderschnecke an einer Förderanlage für Schüttgut bekannt. Die Förderschnecke weist ein Rohr als Grundkörper und daran befestigte Transportwindungen auf, die derart verlaufen, dass das Schüttgut zur Mitte der Förderschnecke hin transportiert wird,

Eine Einrichtung zum Aufgeben von Sintermaterial auf ein Sinterband, die eine gleichmäßige Schichthöhe des Sintermaterials auf dem Sinterband realisieren soll, ist beispielsweise aus der DE 28 14 494 A1 bekannt. Hier wird das Sintermaterial über eine zwischen einer Austragtrommel eines Vorratsbehälters und dem Sinterband angeordnete Pralltrommel auf das Sinterband gefördert. Die Höhe der Sinterschicht auf dem Sinterband wird über einen Messfühler abgetastet, der die Drehzahl des Austragbehälters und der Pralltrommel regelt.

Mit dieser Einrichtung ist es zwar möglich, eine im Mittel konstante Schichthöhe des Sintermaterials auf dem Sinterband zu erreichen, örtliche Höhenunterschiede über die Breite des Sinterbandes sind aber nicht immer zu vermeiden. Diese entstehen z. B. durch Anbackungen an den Austrageinrichtungen und durch Schwankungen in der Feuchtigkeit oder in der Körnung des Sintermaterials, die sich auf Grund unterschiedlicher Schütteigenschaften in einer ungleichmäßigen Verteilung des Sintermaterials auf dem Sinterband bemerkbar machen.

Aus diesem Grund wird nach dem derzeit bekannten Stand der Technik eine zusätzliche mechanische Glätteinrichtung in Form eines Abstreifers eingesetzt, der die Schichthöhe auf dem Sinterband vergleichmäßigt.
Hierbei werden nur die Spitzen der über die Sollschichtdicke des Sintermaterials überstehenden Wellenberge abgestreift, wobei aber nachteilig eine örtliche Verdichtung des Sintermaterials erfolgt. Diese vertikale Verdichtung des Sintermaterials wird durch vertikal auf das Sintermaterial wirkende Kräfte am Abstreifer hervorgerufen, was in der Folge zu einer ungleichmäßigen Sinterung und zu einem Absinken der Sinterleistung führt.

Aufgabe der Erfindung ist es deshalb, ein Verfahren zum Aufgeben von Sintermaterial auf ein Sinterband anzugeben, mit dem kostengünstig eine gleichmäßige Schichthöhe ohne örtliche Verdichtungen des Sintermaterials und damit eine qualitativ einwandfreie Sinterung realisiert werden kann. Eine weitere Aufgabe besteht darin, eine entsprechende Einrichtung anzugeben.

Diese Aufgabe wird nach den Oberbegriffen der Ansprüche 1 und 5 in Verbindung mit deren kennzeichnenden Merkmalen gelöst. Vorteilhafte Weiterbildungen sind Gegenstand von Unteransprüchen.

Nach der Lehre der Erfindung wird zur Lösung dieser Aufgabe ein Verfahren angewendet, mit dem die Vergleichmäßigung der Schichthöhe durch einen eine Verdichtung des Sintermaterials vermeidenden horizontalen Quertransport auf dem Sinterband erfolgt.

Bei diesem Verfahren wird auf vorteilhafte Weise eine Vergleichmäßigung der Sintermaterialhöhe auf dem Sinterband ohne jegliche örtliche Verdichtungen des Sintermaterials realisiert und somit eine konstante und qualitätssichere Sinterung erreicht.

Hierbei werden die nach dem bekannten Abstreifverfahren unvermeidbaren örtliche Verdichtungen in Dickenrichtung durch vertikal wirkende Kräfte am Abstreifer dadurch vermieden, dass beim Vergleichmäßigen der Schichthöhe das Sintermaterial über den Quertransport frei und praktisch ohne Gegendruck über das Sinterband gefördert wird.

Erfindungsgemäß wird der Quertransport über eine mit Transportwindungen versehene, drehbar antreibbare, stationär über dem Sinterband angeordnete Verteilerschnecke realisiert, wobei das über die Sollschichtdicke überstehende Sintermaterial von den Transportwindungen aufgenommen und auf dem Sinterband vergleichmäßigt wird. Um eine optimale Vergleichmäßigung der Mischgutoberfläche auf dem Sinterband zu erreichen, muss die Drehzahl der Verteilerschnecke der zu erreichenden Oberflächengüte angepasst werden.

Zur Vergleichmäßigung der Schichthöhe werden erfindungsgemäß die Berge des über die Sollschichtdicke überstehenden Sintermaterials über die Transportwindungen der Verteilerschnecke in die unterhalb der Sollschichtdicke liegenden Täler transportiert.

In einer vorteilhaften Ausgestaltung des Verfahrens kann der Wirkungsgrad der Verteilerschnecke gesteigert werden, wenn der Quertransport des Sintermaterials ausgehend von der Mitte jeweils zu den Seiten des Sinterbandes erfolgt. Vorteilhaft wird hierbei das Sintermaterial nicht mehr über die gesamte sondern nur noch maximal über die halbe Bandbreite transportiert.

Erfindungsgemäß sind die Transportwindungen der Verteilerschnecke dazu in der Weise ausgebildet, dass diese ausgehend von der Mitte der Längserstreckung der Verteilerschnecke, eine jeweils zu den Bandseiten gerichtete Transportrichtung für das aufgenommene Sintermaterial aufweisen.

Die Verteilerschnecke kann erfindungsgemäß einteilig, z. B. als Gussteil oder vorteilhaft aus einem Grundkörper und darauf befestigten Transportwindungen hergestellt sein. Als zu verwendenden Grundkörper bietet sich beispielsweise ein kostengünstig herstellbares Standardrohr an.

Vorteile und Einzelheiten der Erfindung ergeben sich aus der nachfolgenden Beschreibung.

Es zeigen:
- **Figur 1**: erfindungsgemäß, schematisch dargestellte Einrichtung zur Vergleichmäßigung der Schichthöhe des Sintermaterials auf einem Sinterband,
- **Figur 2**: in schematischer Darstellung die Draufsicht der erfindungsgemäßen Verteilerschnecke.

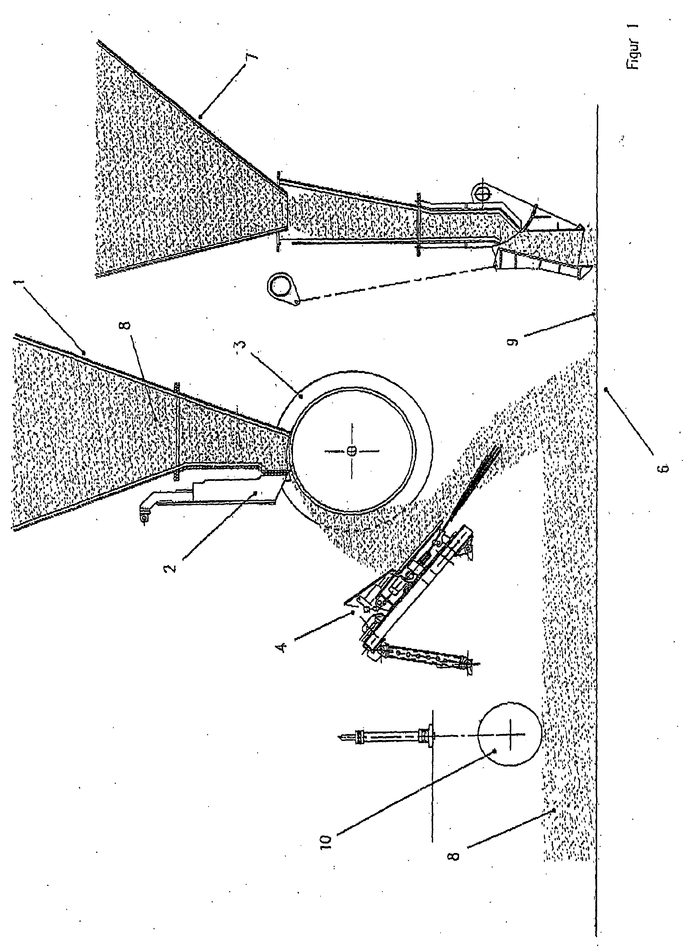

In **Figur 1** ist eine erfindungsgemäße, schematisch dargestellte Einrichtung zur Vergleichmäßigung der Schichthöhe ohne Verdichtung des Sintermaterials auf einem Sinterband dargestellt.

Auf den Wanderrost eines Sinterbandes 6 wird zunächst aus einem Rostbelagbunker 7 der Rostbelag 9 in einer Höhe von ca. 20 bis 40 mm aufgebracht.

Über eine Aufgabeeinrichtung wird aus einem Vorratsbehälter 1 gesteuert über einen Schieber 2 über eine Austragtrommel 3 das Sintermaterial 8 über eine Verteileinrichtung 4 mit einem Federfächer 5 auf den Rostbelag 9 des Wanderrostes bis zu einer Gesamthöhe von beispielsweise 610 mm aufgegeben.

Die Umfangsgeschwindigkeit der Austragtrommel 3 richtet sich nach der Menge des aufzugebenden Sintermaterials 8.

Zur Sicherstellung einer konstanten und qualitativ gleichmäßigen Sinterung ist zur Vergleich-, mäßigung der Schichthöhe des Sintermaterials 8 beabstandet von der Aufgabeeinrichtung eine erfindungsgemäße Glätteinrichtung in Form einer Verteilerschnecke 10 angeordnet.

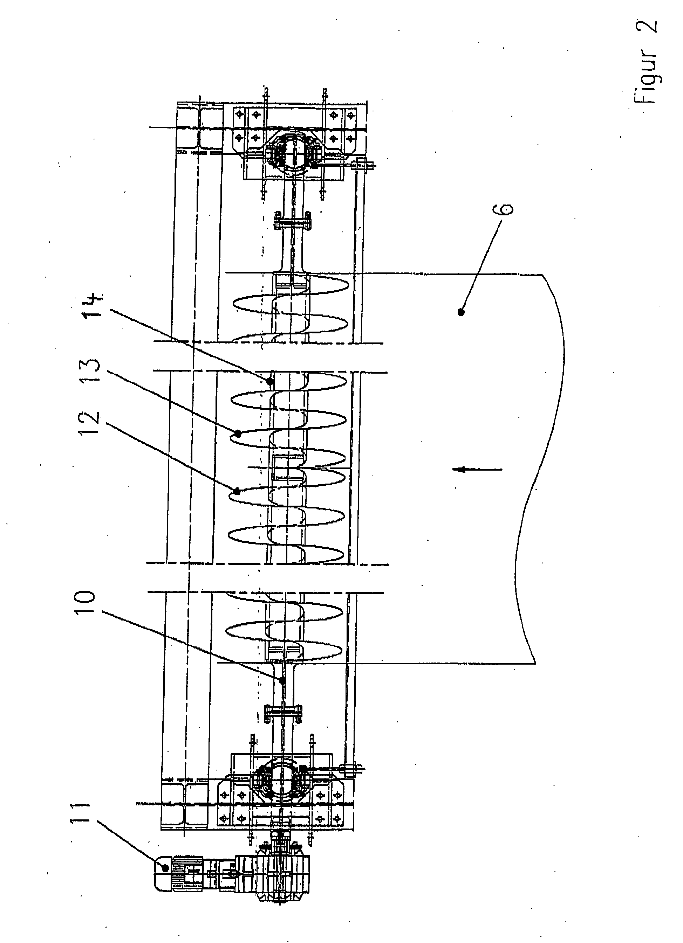

Entsprechend **Figur 2** ist die Verteilerschnecke 10 drehbar angetrieben, erstreckt sich über die gesamte Breite des Sinterbandes 6 und ist mit das Sintermaterial aufnehmenden Transportwindungen 12, 13 versehen.

Bei im Einsatz befindlicher Verteilerschnecke 10 wird das über die Sollschichtdicke überstehende Sintermaterial 8 von den Transportwindungen 12, 13 aufgenommen und auf dem Sinterband 6 über einen eine Verdichtung vermeidenden Quertransport vergleichmäßigt. Hierbei muss die Drehzahl der Verteilerschnecke 10 der zu erreichenden Oberflächengüte angepasst werden, um eine vollständige und optimale Vergleichmäßigung der Mischgutoberfläche auf dem Sinterband zu erreichen.

Zur Vergleichmäßigung der Schichthöhe des Sintermaterials 8 werden hierbei erfindungsgemäß die Berge des über die Sollschichtdicke überstehenden Sintermaterials 8 über die Transportwindungen 12, 13 der Verteilerschnecke 10 in die unter der Sollschichtdicke liegenden Täler transportiert.

**Figur 2** zeigt in einer schematischen Darstellung die über dem Sinterband 6 angeordnete Verteilerschnecke 10.

Die Laufrichtung des Sinterbandes 6 ist mit einem Pfeil dargestellt. Die drehbar gelagerte Verteilerschnecke 10 wird über einen endseitig angeordneten Antriebsmotor 11 angetrieben. Die Verteilerschnecke 10 ist auf dem Außenumfang mit Transportwindungen 12, 13 versehen, wobei diese zur Erhöhung des Wirkungsgrades ausgehend von der Mitte der Längserstreckung eine jeweils zu den Bandseiten gerichtete Transportrichtung für das aufgenommene Sintermaterial 8 aufweisen. Hierdurch wird erreicht, dass der Quertransport des Sintermaterials 8, ausgehend von der Mitte jeweils nur noch über die halbe Breite des Sinterbandes erfolgen muss.

### Bezugszeichenliste

| **Nr.** | **Bezeichnung** |
|---|---|
| 1 | Vorratsbehälter |
| 2 | Schieber |
| 3 | Austragtrommel |
| 4 | Verteileinrichtung |
| 5 | Federfächer |
| 6 | Sinterband |
| 7 | Rostbelagbunker |
| 8 | Sintermaterial |
| 9 | Rostbelag |
| 10 | Verteilerschnecke |
| 11 | Antriebsmotor |
| 12, 13 | Transportwindungen |
| 14 | Grundkörper |

## Patentansprüche

1. Verfahren zum Aufgeben von Sintermaterial auf ein Sinterband, wobei das Sintermaterial aus einer Aufgabeeinrichtung auf das Sinterband befördert, anschließend grob verteilt und die Schichthöhe des Sintermaterials auf dem Sinterband auf Sollschichtdicke vergleichmäßigt wird
**dadurch gekennzeichnet,**
**dass** die Vergleichmäßigung der Schichthöhe durch einen eine Verdichtung des Sintermaterials (8) vermeidenden horizontalen Quertransport auf dem Sinterband (6) erfolgt.

2. Verfahren nach Anspruch 1
**dadurch gekennzeichnet,**
**dass** zur Vergleichmäßigung der Schichthöhe die Berge des über die Sollschichtdicke überstehenden Sintermaterials (8) in die Täler transportiert werden.

3. Verfahren nach Anspruch 1 und 2
**dadurch gekennzeichnet,**
**dass** der Quertransport über eine drehbar antreibbare Glätteinrichtung erfolgt.

4. Verfahren nach einem der Ansprüche 1 - 3
**dadurch gekennzeichnet,**
**dass** der Quertransport des Sintermaterials (8) ausgehend von der Mitte jeweils zu den Seiten des Sinterbandes (6) erfolgt.

5. Einrichtung zum Aufgeben von Sintermaterial auf ein Sinterband, bestehend aus einer Aufgabeeinrichtung für das Sintermaterial auf das Sinterband, einer Verteileinrichtung und einer die Schichthöhe des Sintermaterials auf dem Sinterband vergleichmäßigenden Glätteinrichtung zur Durchführung des Verfahrens nach Anspruch 1
**dadurch gekennzeichnet,**
**dass** die Glätteinrichtung eine in einem Abstand zur Aufgabeeinrichtung angeordnete, über die gesamte Breite des Sinterbandes sich erstreckende, drehbar antreibbare Verteilerschnecke (10) ist.

6. Einrichtung nach Anspruch 5,
**dadurch gekennzeichnet,**
**dass** die Verteilerschnecke (10) mit Transportwindungen (12, 13) versehen ist, die ausgehend von der Mitte der Längserstreckung der Verteilerschnecke (10) eine jeweils zu den Bandseiten gerichtete Transportrichtung für das aufgenommene Sintermateriat (8) aufweisen.

7. Einrichtung nach Anspruch 5 und 6,
**dadurch gekennzeichnet,**
**dass** die Verteilerschnecke (10) als einteiliges Gussteil hergestellt ist.

8. Einrichtung nach Anspruch 5 und 6,
**dadurch gekennzeichnet,**
**dass** die Verteilerschnecke (10) mehrteilig, bestehend aus Grundkörper (14) und darauf befestigten Transportwindungen (12, 13), hergestellt ist.

9. Einrichtung nach Anspruch 7,
**dadurch gekennzeichnet,**
**dass** der Grundkörper (14) ein Rohr ist.
